# EUROPÄISCHE PATENTSCHRIFT

(11) **EP 3 591 344 B1**
(45) Veröffentlichungstag und Bekanntmachung des Hinweises auf die Patenterteilung: **10.03.2021**
(21) Anmeldenummer: 19168345.7
(22) Anmeldetag: 10.04.2019
(51) Int. Cl.: G01D 5/245, G01D 5/347, G01D 5/249

(54) **MESSEINRICHTUNG FÜR EINE SPINDEL ODER EINEN RUNDTISCH**
MEASURING DEVICE FOR A SPINDLE OR A ROTARY TABLE
DISPOSITIF DE MESURE POUR UNE BROCHE OU UN CAROUSSEL

(30) Priorität: 04.07.2018 DE 102018210989
(43) Veröffentlichungstag der Anmeldung: 08.01.2020
(73) Patentinhaber: Dr. Johannes Heidenhain GmbH, 83301 Traunreut (DE)
(72) Erfinder: Mitterreiter, Johann, 83339 Chieming (DE)

(56) Entgegenhaltungen:
- EP-A2- 1 202 025
- WO-A1-2015/075136
- DE-A1- 19 803 249
- US-A1- 2014 111 191
- US-A1- 2014 311 364

## Beschreibung

Die Erfindung betrifft eine Messeinrichtung zur Positionsmessung für Spindeln oder Rundtische gemäß dem Anspruch 1 und eine Baugruppe für eine Spindel oder für einen Rundtisch umfassend eine entsprechende Messeinrichtung.

### GEBIET DER TECHNIK

Die betreffenden Spindeln oder Rundtische werden häufig in Bearbeitungsmaschinen beziehungsweise Bearbeitungszentren eingesetzt. Spindeln oder Motorspindeln halten in Werkzeugmaschinen häufig ein rotierendes Werkzeug, beispielsweise einen Fräser. An Rundtischen werden Werkstücke befestigt, die dann zum Beispiel spanabhebend bearbeitet werden. Ferner werden Rundtische in Messmaschinen verwendet, wobei in dieser Anwendung ein auf dem Rundtisch befestigtes Werkstück vermessen wird. Solche Spindeln oder Rundtische sind häufig mit Winkelmesseinrichtungen ausgestattet, die zur Messung von Drehbewegungen einer Welle dienen. Winkelmesseinrichtungen werden insbesondere bei Werkzeugmaschinen beziehungsweise Messmaschinen für die Messung von rotatorischen Bewegungen eingesetzt. Es besteht der zunehmende Wunsch die Leistungsfähigkeit derartiger Spindeln oder Rundtische, insbesondere die Präzision während des Betriebs, zu erhöhen.

### STAND DER TECHNIK

In der JP 2010-217167 A ist eine Messeinrichtung offenbart, die einen Encoder aufweist, der eine Drehzahlmessung einer Welle erlaubt und zudem Signale erzeugt, weiche Rückschlüsse auf eine axiale Belastung der Welle erlauben.

Aus der Offenlegungsschrift EP 1 202 025 A2 ist eine Winkelmesseinrichtung bekannt, die eine Welle aufweist, auf der eine erste Teilung und eine zweite Teilung aufgebracht sind. Die Teilungen können von einem sich in axialer Richtung erstreckendem Sensorarray abgetastet werden, das z.B. aus Hallelementen besteht, die vorzugsweise linear angeordnet sind. Damit eine absolute Winkelmessung über mehrere Umdrehung ermöglicht wird, wird dort durch das Sensorarray auch die axiale Position eines mit Hilfe eines Gewindes axial verschiebbaren Reiters bestimmt.

### ZUSAMMENFASSUNG DER ERFINDUNG

Der Erfindung liegt die Aufgabe zugrunde eine Messeinrichtung zu schaffen, die für eine Spindel oder für einen Rundtisch geeignet ist und die es ermöglicht im laufenden Betrieb die Position einer Drehachse in mehreren Richtungen zu bestimmen.

Diese Aufgabe wird erfindungsgemäß durch die Merkmale des Anspruches 1 gelöst.

Demnach ist die Messeinrichtung für eine Spindel oder für einen Rundtisch geeignet und umfasst zumindest zwei erste Positionsaufnehmer, zumindest zwei zweite Positionsaufnehmer und ein Skalenelement, das eine erste Teilung beziehungsweise eine erste Skala und eine zweite Teilung beziehungsweise eine zweite Skala aufweist. Das Skalenelement ist relativ zu den ersten und zweiten Positionsaufnehmern um eine Drehachse drehbar angeordnet.

Die erste Teilung umfasst regelmäßige Strukturen, die entlang einer ersten Richtung parallel zueinander aneinandergereiht angeordnet sind, wobei die erste Richtung eine Richtungskomponente in Umfangsrichtung aufweist. Die zweite Teilung umfasst regelmäßige Strukturen, die entlang einer zweiten Richtung parallel zueinander aneinandergereiht angeordnet sind, wobei die zweite Richtung eine Richtungskomponente in axialer Richtung aufweist. Die zumindest zwei ersten Positionsaufnehmer sind zueinander in Umfangsrichtung versetzt angeordnet, wobei durch die zumindest zwei ersten Positionsaufnehmer die erste Teilung abtastbar ist, so dass die Position des Skalenelements in einer Ebene, die senkrecht zur Drehachse orientiert ist, bestimmbar ist (und damit die Position der Drehachse beziehungsweise eine Achsverlagerung unter Betriebslast). Zudem ist durch Abtastung der ersten Teilung durch zumindest einen der ersten Positionsaufnehmer eine Winkelstellung des Skalenelements in Bezug auf die ersten Positionsaufnehmer (also relativ zu den Positionsaufnehmern) innerhalb einer Umdrehung hinweg absolut bestimmbar. Die zumindest zwei zweiten Positionsaufnehmer sind ebenfalls zueinander in Umfangsrichtung versetzt angeordnet, wobei durch die zweiten Positionsaufnehmer die zweite Teilung abtastbar und die axiale Position des Skalenelements (und damit eine Achsverlagerung in axialer Richtung unter Betriebslast) bestimmbar ist.

Durch zumindest einen der ersten Positionsaufnehmer ist eine Winkelstellung des Skalenelements in Bezug auf die ersten Positionsaufnehmer innerhalb einer Umdrehung hinweg absolut bestimmbar. Dies kann beispielsweise dadurch erreicht werden, dass die erste Teilung eine absolute Codespur aufweist oder aber dass auf dem Skalenelement eine Referenzmarke aufgebracht ist, die in Verbindung mit einer inkrementalen Teilung eine absolute Bestimmung der Winkelstellung innerhalb einer Umdrehung zulässt.

Die erste Richtung, entlang welcher die regelmäßigen Strukturen der ersten Teilung aneinandergereiht angeordnet sind, kann identisch mit der Umfangsrichtung sein. Genauso kann die erste Richtung zur Umfangsrichtung geneigt beziehungsweise schräg angeordnet sein (jedoch nicht senkrecht zur Umfangsrichtung). Ebenso kann die zweite Richtung, entlang welcher die regelmäßigen Strukturen der zweiten Teilung aneinandergereiht angeordnet sind, identisch mit der axialen Richtung (und damit parallel zur Drehachse) angeordnet sein. Genauso kann die zweite Richtung zur axialen Richtung geneigt beziehungsweise schräg angeordnet sein (jedoch nicht senkrecht zur axialen Richtung). Beispielsweise können regelmäßigen Strukturen der ersten Teilung und die der zweiten Teilung pfeilförmig zueinander orientiert sein.

Mit Vorteil weist die Messeinrichtung zumindest drei erste Positionsaufnehmer und zumindest drei zweite Positionsaufnehmer auf.

In weiterer Ausgestaltung der Erfindung weist die Messeinrichtung eine Leiterplatte auf, auf der zumindest ein elektronischer Baustein montiert ist. Dabei sind die ersten Positionsaufnehmer mit dem elektronischen Baustein elektrisch verbunden, so dass Signale der ersten Positionsaufnehmer durch den elektronischen Baustein verarbeitbar sind. Alternativ oder ergänzend sind die zweiten Positionsaufnehmer mit dem elektronischen Baustein elektrisch verbunden, so dass Signale der zweiten Positionsaufnehmer durch den elektronischen Baustein verarbeitbar sind. Als elektronischer Baustein kommt insbesondere ein Prozessor beziehungsweise ein Mikrocontroller in Betracht.

Vorteilhafterweise weist die Leiterplatte eine ringförmige Gestalt auf. Unter dem Begriff ringförmig kann eine geschlossene Ringform verstanden werden, bei der also die ringförmige Leiterplatte als ein geschlossener sich um 360° erstreckender Ring ausgebildet ist. Es kann unter dem Begriff ringförmig auch eine offene Ringform verstanden werden, beispielsweise ein offenes sich um mindestens 180°, insbesondere mindestens 270° erstreckendes Ringsegment.

Mit Vorteil sind die ersten Positionsaufnehmer und die zweiten Positionsaufnehmer mit dem elektronischen Baustein elektrisch verbunden, wobei durch den elektronischen Baustein die Winkelstellung des Skalenelements, die Position des Skalenelements in der Ebene senkrecht zur Drehachse und die axiale Position des Skalenelements bestimmbar sind.

In weiterer Ausgestaltung der Erfindung ist durch die zweiten Positionsaufnehmer eine Verkippung des Skalenelements und damit eine Verkippung der Drehachse bestimmbar. Insbesondere können zumindest die zweiten Positionsaufnehmer mit dem elektronischen Baustein elektrisch verbunden sein, wobei durch den elektronischen Baustein die Verkippung des Skalenelements bestimmbar ist. Hier ist es besonders vorteilhaft wenn drei oder mehr zweite Positionsaufnehmer verwendet werden.

Bei Spindeln oder Rundtischen, die naturgemäß entsprechend steif ausgestaltet sind, sind derartige Verkippungen vergleichsweise klein und liegen in Bereichen von weniger als einer Winkelminute relativ zur idealen Drehachse, beispielsweise 100 Winkelsekunden bis hinab zu 50 Winkelsekunden. Folglich liegen durch diese Verkippungen auch nur minimale Positionsänderungen vor, so dass die Messeinrichtung eine sehr hohe Auflösung haben muss um verlässliche Aussagen beziehungsweise quantitative Werte bezüglich der Verkippungen liefern zu können. Dadurch, dass die Drehachse gegebenenfalls rotiert, kann die beschriebene Verkippung zu Taumelbewegungen des Skalenelements führen, wobei die Taumelbewegungen durch die Messeinrichtung insbesondere durch Hinzunahme der gemessenen Winkelstellung quantitativ festgehalten werden können.

In weiterer Ausgestaltung der Erfindung ist auf der Leiterplatte ein weiterer Sensor montiert, durch welchen Beschleunigungen beziehungsweise Vibrationen oder Temperaturen messbar sind. Insbesondere können auf der Leiterplatte auch zwei oder mehrere weitere Sensoren montiert sein.

Vorteilhafterweise ist auf der Leiterplatte ein Speicherbaustein montiert, der als Datenlogger verwendbar ist zur Speicherung von Information, die auf den von den ersten Positionsaufnehmern und / oder den zweiten Positionsaufnehmern und / oder vom weiteren Sensor erzeugten Signalen beruht.

Mit Vorteil sind die ersten Positionsaufnehmer und / oder die zweiten Positionsaufnehmer und / oder der weitere Sensor durch flexible Leiterplatten mit der ringförmigen Leiterplatte verbunden.

In weiterer Ausgestaltung der Erfindung sind die ersten Positionsaufnehmer und / oder die zweiten Positionsaufnehmer als Magnetsensoren ausgestaltet und die Strukturen der ersten Teilung und / oder der zweiten Teilung als magnetische Pole. Die ersten Positionsaufnehmer und / oder die zweiten Positionsaufnehmer können beispielsweise auf Basis eines magnetoresistiven Prinzips arbeiten oder als Hall-Sensoren ausgestaltet sein. Alternativ kann die Messeinrichtung auch auf einem optischen oder induktiven Messprinzip beruhen, wobei auch Kombinationen der Prinzipien möglich sind, so dass die erste Teilung nach einem anderen Prinzip abgetastet werden kann als die zweite Teilung.

Vorteilhafterweise sind die Sensoren der ersten Positionsaufnehmer, durch welche die erste Teilung abtastbar ist, gegenüber den Sensoren der zweiten Positionsaufnehmer, durch welche die zweite Teilung abtastbar ist, bezüglich der axialen Richtung versetzt angeordnet.

Mit Vorteil ist zumindest die zweite Teilung (oder beide Teilungen) auf einer Mantelseite eines zylindrischen Skalenelementes aufgebracht.

Als Skalenelement kommt beispielsweise ein ringförmiger Körper in Betracht, der an einer Welle befestigt werden kann. Alternativ können aber auch die erste und / oder die zweite Teilung direkt auf die Welle aufgebracht sein.

Die Erfindung umfasst auch eine Baugruppe für eine Spindel oder für einen Rundtisch mit einer Messeinrichtung, welche eine Leiterplatte umfasst, auf der ein elektronischer Baustein montiert ist, so dass Signale der ersten und / oder zweiten Positionsaufnehmer durch den elektronischen Baustein verarbeitbar sind, wobei die Baugruppe ein Gehäuse aufweist und die Leiterplatte von dem Gehäuse umschlossen ist.

Mit Vorteil umfasst die Baugruppe eine Welle, ein Vorspannelement und zwei Lager, die als Wälzlager ausgebildet sind. Das Skalenelement ist axial bezüglich der Welle verschieblich montiert und die Lager sind mit Hilfe des Vorspannelements axial so vorgespannt, dass sich das Skalenelement im Kraftfluss der axialen Vorspannung befindet. Alternativ oder ergänzend umfasst die Messeinrichtung ein Messeinrichtungsgehäuse, das axial bezüglich der Welle verschieblich montiert ist, wobei die Lager mit Hilfe des Vorspannelements axial so vorgespannt sind, dass sich das Messeinrichtungsgehäuse im Kraftfluss der axialen Vorspannung befindet.

Vorteilhafte Ausbildungen der Erfindung entnimmt man den abhängigen Ansprüchen.

Durch die Messeinrichtung können Achsverlagerungen z.B. einer Werkzeugspindel online detektiert werden, die Rotortemperatur berührungslos gemessen, Unwuchten und Vibrationen der Drehachse aufgenommen und Informationen über Betriebszustände (max. Temperatur, max. Vibrationen, Betriebsstunden, etc.) über einen längeren Zeitraum gespeichert und wieder ausgegeben werden. Insbesondere basierend auf den Messwerten der Winkelstellung und der Position des Skalenelements in der Ebene senkrecht zur Drehachse (Achsverlagerung) kann eine Korrektur der Soll-Position im Bearbeitungs- beziehungsweise Messprozess durch eine Numerische Steuerung vorgenommen werden. Somit kann beispielsweise eine Bahnkurve eines spanabhebenden Werkzeugs, das etwa in einer Spindel eingespannt ist, während der Bearbeitung eines Werkstückes korrigiert werden. Insbesondere kann die Messeinrichtung so konfiguriert sein, dass im Zusammenspiel mit einer Numerischen Steuerung Korrekturwerte erzeugt werden, die auf den durch die Messeinrichtung gemessenen Positionsdaten in Verbindung mit der absoluten Winkelstellung basieren.

Die Messeinrichtung kann zu diesem Zweck vorteilhafterweise eine Auflösung von weniger als 2 µm haben, insbesondere von weniger als 1 µm, insbesondere von weniger als 750 nm. Diese Werte für die Auflösungen können sowohl für die Bestimmung der axialen als auch der lateralen Positionen, also in der Ebene senkrecht zur Drehachse erreicht werden.

Weitere Einzelheiten und Vorteile der erfindungsgemäßen Messeinrichtung ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: einen Längsschnitt durch eine Spindel mit einer Messeinrichtung,
- Figur 2: einen Querschnitt durch die Spindel mit der Messeinrichtung,
- Figur 3: eine Detailansicht der Messeinrichtung im Längsschnitt,
- Figur 4: eine Detailansicht eines Skalenelements der Messeinrichtung.

### BESCHREIBUNG DER AUSFÜHRUNGSFORMEN

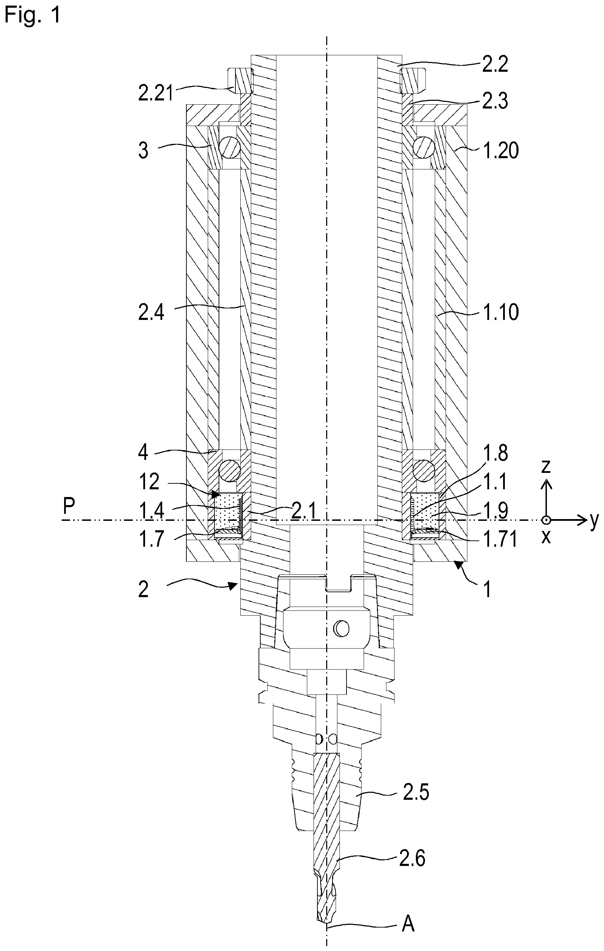

In der Figur 1 ist ein Längsschnitt durch eine Spindel einer Werkzeugmaschine dargestellt, wobei die Werkzeugmaschine im vorgestellten Ausführungsbeispiel als eine Fräsmaschine ausgestaltet ist. Die Spindel umfasst eine erste Bauteilgruppe 1, die auch als Stator bezeichnet werden kann, sowie eine zweite Bauteilgruppe 2, die relativ zur ersten Bauteilgruppe 1 um eine Drehachse A drehbar ist und daher als Rotor fungiert. Zudem umfasst die Spindel zwei Lager 3, 4, die hier als Wälzlager, insbesondere Schrägkugellager, ausgestaltet sind. Die zweite Bauteilgruppe 2 der Spindel wird von einem in den Figuren nicht dargestelltem Motor angetrieben.

Die erste Bauteilgruppe 1 weist ein Gehäuse 1.20 auf, in welchem die Lager 3, 4 und eine Messeinrichtung 12 aufgenommen sind, wobei ein Messeinrichtungsgehäuse 1.8 mit dem Gehäuse 1.20 verbunden ist. Axial zwischen den Außenringen der Lager 3, 4 ist weiterhin eine Distanzhülse 1.10 angeordnet.

Die zweite Bauteilgruppe 2 weist eine Welle 2.2 auf, an der ein Skalenelement 2.1 der Messeinrichtung 12, die Innenringe der Lager 3, 4 sowie ein Distanzring 2.3 und eine Abstandshülse 2.4 angeordnet sind. An einem Ende der Welle 2.2 ist im vorgestellten Ausführungsbeispiel eine Werkzeugaufnahme 2.5, hier ein Hohlschaftkegel, befestigt. In dieser Werkzeugaufnahme 2.5 ist ein Fräswerkzeug 2.6 montiert.

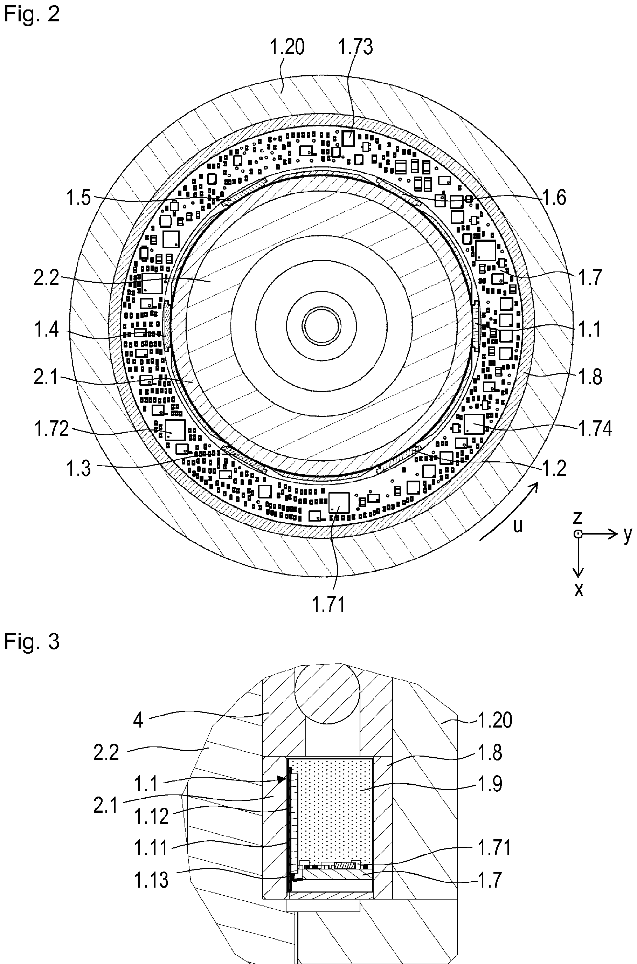

Die Messeinrichtung 12 wird zunächst anhand der Figuren 2 und 3 erläutert. Gemäß der Figur 2, die einen Querschnitt durch die Spindel auf der Höhe der Messeinrichtung 12 in einer Ebene P darstellt, ist innen liegend im Schnitt die Welle 2.2 zu sehen, an der das Skalenelement 2.1 axial verschieblich aber drehfest fixiert ist. Die Welle 2.2 und das Skalenelement 2.1 sind drehbar gegenüber einer Leiterplatte 1.7 angeordnet, wobei in der Figur 2 der Übersichtlichkeit halber auf die Darstellung einer in den Figuren 1 und 3 sichtbaren Vergussmasse 1.9 verzichtet wurde. Die Messeinrichtung 12 umfasst drei erste Positionsaufnehmer 1.1, 1.3, 1.5 und drei zweite Positionsaufnehmer 1.2, 1.4, 1.6. Die ersten Positionsaufnehmer 1.1, 1.3, 1.5 sind in Umfangsrichtung u jeweils versetzt zueinander angeordnet. Ebenso sind die zweiten Positionsaufnehmer 1.2, 1.4, 1.6 in Umfangsrichtung u jeweils versetzt zueinander angeordnet.

Die Positionsaufnehmer 1.1 bis 1.6 und die ringförmige Leiterplatte 1.7 sind drehfest mit dem Messeinrichtungsgehäuse 1.8 und damit drehfest mit dem Gehäuse 1.20 der Spindel verbunden. Auf der Leiterplatte 1.7 sind unter anderem ein erster elektronischer Baustein 1.71, ein zweiter elektronischer Baustein 1.72, ein weiterer Sensor 1.73 sowie ein Speicherbaustein 1.74 montiert.

Mit Hilfe eines Vorspannelements 2.21 (hier eine Wellenmutter) kann eine mechanische Vorspannung in die Lager 3, 4 der Spindel eingeleitet werden. Im vorgestellten Ausführungsbeispiel ist die Messeinrichtung so angeordnet, dass sich das relativ zur Welle 2.2 verschiebliche ringförmige Skalenelement 2.1 und das das relativ zur Welle 2.2 verschiebliche ringförmige Messeinrichtungsgehäuse 1.8 der Messeinrichtung 12 im Kraftfluss der axialen Vorspannung befinden.

Mit Bezug auf die Figur 3 wird der Aufbau der Positionsaufnehmer 1.1 bis 1.6 anhand des Positionsaufnehmers 1.1 beschrieben, der den ersten Positionsaufnehmern 1.1, 1.3, 1.5 zugeordnet ist, wobei im vorgestellten Ausführungsbeispiel alle Positionsaufnehmer 1.1 bis 1.6 im Wesentlichen identisch aufgebaut und auf jeweils die gleiche Weise mit der Leiterplatte 1.7 elektrisch kontaktiert sind. Hier sind die Positionsaufnehmer 1.1 bis 1.6 als magnetische Aufnehmer ausgestaltet. Der Positionsaufnehmer 1.1 umfasst einen Sensor 1.11 und eine Platine 1.12, die relativ zum Sensor 1.11 radial außen liegend angeordnet ist. Die Platine 1.12 ist durch eine flexible Leiterplatte 1.13 mit der ringförmigen Leiterplatte 1.7 elektrisch verbunden. Im vorgestellten Ausführungsbeispiel ist der Sensor 1.11 als magnetoresistiver Detektor ausgestaltet. Insbesondere kann der Sensor 1.11 als magnetoresistive Strukturen auf einem Glassubstrat ausgestaltet und durch eine Durchkontaktierung mit der Platine 1.12 elektrisch verbunden sein.

Demgegenüber liegt zwischen dem Sensor 1.11 beziehungsweise den Positionsaufnehmern 1.1 bis 1.6 und dem Skalenelement 2.1 ein Luftspalt vor, der im vorgestellten Ausführungsbeispiel eine Größenordnung von weniger als 200 µm aufweist. Die Sensoren der ersten Positionsaufnehmer 1.1, 1.3, 1.5 sind bezüglich der axialen Richtung z gegenüber den Sensoren der zweiten Positionsaufnehmer 1.2, 1.4, 1.6 versetzt angeordnet.

Das Skalenelement 2.1 ist im vorgestellten Ausführungsbeispiel als ein zylindrischer beziehungsweise ringförmiger Körper ausgebildet an dessen Mantelseite sowohl die erste Teilung 2.11 als auch die zweite Teilung 2.12 angeordnet sind, wobei die erste Teilung 2.11 gegenüber der zweiten Teilung 2.12 bezüglich der axialen Richtung z versetzt angeordnet ist.

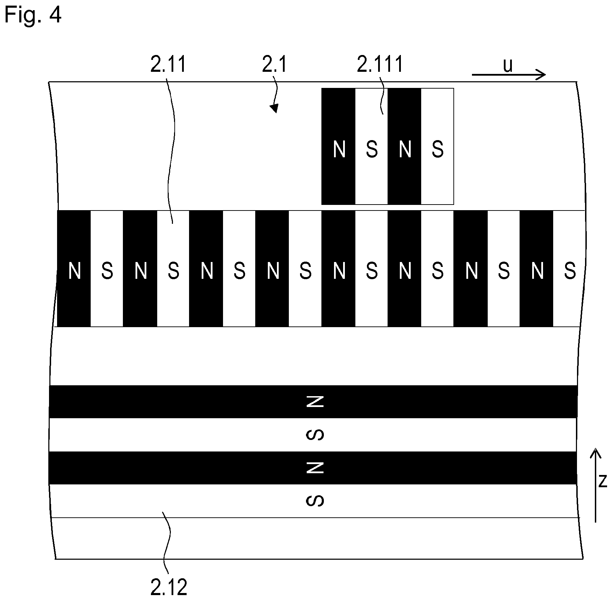

In der Figur 4 ist ein Ausschnitt einer mantelseitigen Ansicht auf das Skalenelement 2.1 gezeigt. Die erste Teilung 2.11 umfasst regelmäßige Strukturen beziehungsweise Linien (in der Figur schwarze und weiße Rechtecke), die entlang einer ersten Richtung parallel zueinander aneinandergereiht angeordnet sind, wobei die erste Richtung eine Richtungskomponente in Umfangsrichtung u aufweist. Im vorgestellten Ausführungsbeispiel ist die erste Richtung identisch mit der Umfangsrichtung u. Zudem umfasst die erste Teilung 2.11 eine Referenzmarke 2.111.

Die zweite Teilung 2.12 umfasst regelmäßige Strukturen beziehungsweise Linien (in der Figur schwarze und weiße Rechtecke), die entlang einer zweiten Richtung parallel zueinander aneinandergereiht angeordnet sind, wobei die zweite Richtung eine Richtungskomponente in axialer Richtung aufweist. Im vorgestellten Ausführungsbeispiel ist die zweite Richtung identisch mit der axialen Richtung z.

Mit anderen Worten umfasst die erste Teilung 2.11 regelmäßige Strukturen, die hier im Prinzip rechteckig ausgestaltet sind und deren Längsseiten in der zweiten Richtung orientiert und parallel zueinander angeordnet sind. Die zweite Richtung verläuft im vorgestellten Ausführungsbeispiel parallel zur Drehachse A beziehungsweise parallel zur Richtung z. Die zweite Teilung 2.12 umfasst ebenfalls regelmäßige Strukturen, die hier umlaufend ausgestaltet sind und deren umlaufende Längsseiten in der ersten Richtung orientiert und parallel zueinander angeordnet sind. Die erste Richtung verläuft in Umfangsrichtung u.

Die Strukturen im vorgestellten Ausführungsbeispiel sind als magnetische Nord- und Südpole ausgestaltet.

Durch die ersten Positionsaufnehmer 1.1, 1.3, 1.5 ist die erste Teilung 2.11 in der Weise abtastbar, dass durch die ersten Positionsaufnehmer 1.1, 1.3, 1.5 eine Winkelstellung des Skalenelements 2.1 in Bezug auf die ersten Positionsaufnehmer 1.1, 1.3, 1.5 bestimmbar ist. Dabei kann die Winkelstellung innerhalb einer Umdrehung hinweg absolut bestimmt werden. Zu diesem Zweck kann wie in der Figur 3 gezeigt eine an sich inkrementale erste Teilung 2.11 verwendet werden, durch die in Verbindung mit der Referenzmarke 2.111 eine absolute Winkelstellung über eine Umdrehung hinweg erzeugbar ist. Alternativ kann die erste Teilung 2.11 absolut, zum Beispiel als Pseudo-Random-Code oder Gray-Code, im Sinne einer Codierung, also mit einer Erzeugung eines eindeutigen Codewerts ausgestaltet sein. Die Signale der ersten Positionsaufnehmer 1.1, 1.3, 1.5 werden zum elektronischen Baustein 1.71 geleitet, mit dem die ersten Positionsaufnehmer 1.1, 1.3, 1.5 über Leiterbahnen der Leiterplatte 1.7 elektrisch verbunden sind. Die insbesondere digitalen Werte der Winkelstellung werden dann von dem elektronischen Baustein 1.71 erzeugt. Außerdem kann durch geeignete Verknüpfung der Positionssignale der ersten Positionsaufnehmer 1.1, 1.3, 1.5 im dem elektronischen Baustein 1.71 die Position des Skalenelements 2.1 in der Ebene P, die senkrecht zur Drehachse A orientiert ist, bestimmt werden, also die x, y Koordinaten der tatsächlichen Lage der Drehachse A. Diese Position, die auch als laterale Position bezeichnet werden kann, hängt bei der gegebenen Spindel von der Belastung des Werkzeuges 2.6 während der Bearbeitung ab. Zudem wird der aktuellen lateralen Position auch die absolute Winkelstellung der Welle 2.2 zugeordnet, so dass beispielsweise erkennbar ist, welche Schneide des Werkzeuges 2.6 im Eingriff mit dem Werkstück zu welcher Belastung der Spindel beziehungsweise Welle 2.2 führt.

Ebenso sind die zweiten Positionsaufnehmer 1.2, 1.4, 1.6 mit dem elektronischen Baustein 1.71 elektrisch verbunden. Die zweiten Positionsaufnehmer 1.2, 1.4, 1.6 dienen zur Abtastung der zweiten Teilung 2.12, wobei durch die zweiten Positionsaufnehmer 1.2, 1.4, 1.6 die axiale Position des Skalenelements 2.1 bestimmbar ist. Im elektronischen Baustein 1.71 wird auch der axialen Position die absolute Winkelstellung der Welle 2.2 zugeordnet.

Durch die Erfindung ist es möglich insbesondere bei Spindeln oder Rundtischen in Abhängigkeit von der absoluten Winkelstellung der Welle 2.2 deren laterale und axiale Position zu messen. Dadurch, dass die genannten Spindeln oder Rundtische ohnehin sehr steif konstruiert sind, werden hier Positionsmessungen durchgeführt, die sich im µm-Bereich oder weniger bewegen. Ebenso können Verkippungen der Drehachse A relativ zum Gehäuse 1.1 gemessen werden. Auch zu diesem Zweck ist eine hohe Auflösung insbesondere der zweiten Positionsaufnehmer 1.2, 1.4, 1.6 erforderlich.

Im Betrieb der Messeinrichtung 12 werden im Speicherbaustein 1.74 Daten aus dem weiteren Sensor 1.73 im Sinne eines Datenloggers gespeichert, so dass beispielsweise aufgetretene Temperaturen oder Schockbelastungen nachvollziehbar festgehalten werden.

## Patentansprüche

1. Messeinrichtung (12) für eine Spindel oder für einen Rundtisch umfassend zumindest zwei erste Positionsaufnehmer (1.1, 1.3, 1.5) und zumindest zwei zweite Positionsaufnehmer (1.2, 1.4, 1.6) und ein Skalenelement (2.1), das eine erste Teilung (2.11) und eine zweite Teilung (2.12) aufweist und relativ zu den ersten und zweiten Positionsaufnehmern (1.1 bis 1.6) um eine Drehachse (A) drehbar angeordnet ist, wobei
- die erste Teilung (2.11) regelmäßige Strukturen umfasst, die entlang einer ersten Richtung parallel zueinander aneinandergereiht angeordnet sind, wobei die erste Richtung eine Richtungskomponente in Umfangsrichtung (u) aufweist, und
- die zweite Teilung (2.12) regelmäßige Strukturen umfasst, die entlang einer zweiten Richtung parallel zueinander aneinandergereiht angeordnet sind, wobei die zweite Richtung eine Richtungskomponente in axialer Richtung (z) aufweist, und
- die zumindest zwei ersten Positionsaufnehmer (1.1, 1.3, 1.5) zueinander in Umfangsrichtung (u) versetzt angeordnet sind, wobei durch die zumindest zwei ersten Positionsaufnehmer (1.1, 1.3, 1.5) die erste Teilung (2.11) abtastbar ist, so dass die laterale Position des Skalenelements (2.1) in einer Ebene (P), die senkrecht zur Drehachse (A) orientiert ist, bestimmbar ist, wobei zudem durch zumindest einen der ersten Positionsaufnehmer (1.1, 1.3, 1.5) eine Winkelstellung des Skalenelements (2.1) in Bezug auf die ersten Positionsaufnehmer (1.1, 1.3, 1.5) innerhalb einer Umdrehung hinweg absolut bestimmbar ist, und
- die zumindest zwei zweiten Positionsaufnehmer (1.2, 1.4, 1.6) zueinander in Umfangsrichtung (u) versetzt angeordnet sind, wobei durch die zweiten Positionsaufnehmer (1.2, 1.4, 1.6) die zweite Teilung (2.12) abtastbar und die axiale Position des Skalenelements (2.1) bestimmbar ist.

2. Messeinrichtung (12) gemäß dem Anspruch 1, wobei die Messeinrichtung (12) zumindest drei erste Positionsaufnehmer (1.1, 1.3, 1.5) und zumindest drei zweite Positionsaufnehmer (1.2, 1.4, 1.6) aufweist.

3. Messeinrichtung (12) gemäß einem der vorhergehenden Ansprüche, wobei die Messeinrichtung (12) eine Leiterplatte (1.7) aufweist, auf der zumindest ein elektronischer Baustein (1.71, 1.72) montiert ist, wobei die ersten Positionsaufnehmer (1.1, 1.3, 1.5) und / oder die zweiten Positionsaufnehmer (1.2, 1.4, 1.6) mit dem elektronischen Baustein (1.71, 1.72) elektrisch verbunden sind, so dass Signale der ersten Positionsaufnehmer (1.1, 1.3, 1.5) und / oder der zweiten Positionsaufnehmer (1.2, 1.4, 1.6) durch den elektronischen Baustein (1.71, 1.72) verarbeitbar sind.

4. Messeinrichtung (12) gemäß dem Anspruch 3, wobei die Leiterplatte (1.7) eine ringförmige Gestalt aufweist.

5. Messeinrichtung (12) gemäß dem Anspruch 3 oder 4, wobei die ersten Positionsaufnehmer (1.1, 1.3, 1.5) und die zweiten Positionsaufnehmer (1.2, 1.4, 1.6) mit dem elektronischen Baustein (1.71, 1.72)elektrisch verbunden sind, wobei durch den elektronischen Baustein (1.71, 1.72) die Winkelstellung, die Position in der Ebene (P) und die axiale Position des Skalenelements (2.1) bestimmbar sind.

6. Messeinrichtung (12) gemäß einem der vorhergehenden Ansprüche, wobei durch die zweiten Positionsaufnehmer (1.2, 1.4, 1.6) eine Verkippung des Skalenelements (2.1) und damit der Drehachse (A) bestimmbar ist.

7. Messeinrichtung (12) gemäß einem der Ansprüche 3 bis 6, wobei auf der Leiterplatte (1.7) ein weiterer Sensor (1.73) montiert ist, durch welchen Beschleunigungen oder Temperaturen messbar sind.

8. Messeinrichtung (12) gemäß einem der Ansprüche 3 bis 7, wobei auf der Leiterplatte (1.7) ein Speicherbaustein (1.74) montiert ist, der als Datenlogger verwendbar ist zur Speicherung von Information die auf den von den ersten Positionsaufnehmern (1.1, 1.3, 1.5) und / oder den zweiten Positionsaufnehmern (1.2, 1.4, 1.6) und / oder dem weiteren Sensor (1.73) erzeugten Signalen beruht.

9. Messeinrichtung (12) gemäß einem der Ansprüche 3 bis 8, wobei die ersten Positionsaufnehmer (1.1, 1.3, 1.5) und / oder die zweiten Positionsaufnehmer (1.2, 1.4, 1.6) und / oder der weitere Sensor (1.73) durch flexible Leiterplatten (1.13) mit der ringförmigen Leiterplatte (1.7) verbunden sind.

10. Messeinrichtung (12) gemäß einem der vorhergehenden Ansprüche, wobei die ersten Positionsaufnehmer (1.1, 1.3, 1.5) und / oder die zweiten Positionsaufnehmer (1.2, 1.4, 1.6) als Magnetsensoren ausgestaltet sind und die Strukturen der ersten Teilung (2.11) und / oder der zweiten Teilung (2.12) als magnetische Pole.

11. Messeinrichtung (12) gemäß einem der vorhergehenden Ansprüche, wobei die Sensoren (1.11) der ersten Positionsaufnehmer (1.1, 1.3, 1.5) bezüglich der axialen Richtung (z) gegenüber den Sensoren der zweiten Positionsaufnehmer (1.2, 1.4, 1.6) versetzt angeordnet sind.

12. Messeinrichtung (12) gemäß einem der vorhergehenden Ansprüche, wobei die zweite Teilung (2.12) auf einer Mantelseite eines zylindrischen Skalenelementes (2.1) aufgebracht ist.

13. Baugruppe für eine Spindel oder für einen Rundtisch umfassend eine Messeinrichtung (12) gemäß dem Anspruch 3, wobei die Baugruppe ein Gehäuse (1.20) aufweist und die Leiterplatte (1.7) von dem Gehäuse (1.20) umschlossen ist.

14. Baugruppe gemäß dem Anspruch 12, wobei die Baugruppe eine Welle (2.2), ein Vorspannelement (2.21) und zwei Lager (3, 4), die als Wälzlager ausgebildet sind, umfasst, wobei das Skalenelement (2.1) axial bezüglich der Welle (2.2) verschieblich montiert ist und die Lager (3, 4) mit Hilfe des Vorspannelements (2.21) axial so vorgespannt sind, dass sich das Skalenelement (2.1) im Kraftfluss der axialen Vorspannung befindet.

15. Baugruppe gemäß dem Anspruch 13 oder 14, wobei die Baugruppe eine Welle (2.2), ein Vorspannelement (2.21) und zwei Lager (3, 4), die als Wälzlager ausgebildet sind, umfasst, wobei die Messeinrichtung (12) ein Messeinrichtungsgehäuse (1.8) umfasst, das axial bezüglich der Welle (2.2) verschieblich montiert ist, und die Lager (3, 4) mit Hilfe des Vorspannelements (2.21) axial so vorgespannt sind, dass sich das Messeinrichtungsgehäuse (1.8) im Kraftfluss der axialen Vorspannung befindet.

## Claims

1. Measurement device (12) for a spindle or for a rotary table, comprising at least two first position transducers (1.1, 1.3, 1.5) and at least two second position transducers (1.2, 1.4, 1.6) and a scale element (2.1) that has a first graduation (2.11) and a second graduation (2.12) and is arranged relative to the first and second position transducers (1.1 to 1.6) so as to be rotatable about an axis of rotation (A), wherein
- the first graduation (2.11) comprises regular structures arranged one behind the other along a first direction such that they are parallel to one another, wherein the first direction has a directional component in the circumferential direction (u), and
- the second graduation (2.12) comprises regular structures arranged one behind the other along a second direction such that they are parallel to one another, wherein the second direction has a directional component in the axial direction (z), and
- the at least two first position transducers (1.1, 1.3, 1.5) are arranged relative to one another such that they are offset in the circumferential direction (u), wherein the first graduation (2.11) is scannable by the at least two first position transducers (1.1, 1.3, 1.5) such that the lateral position of the scale element (2.1) is determinable in a plane (P) oriented perpendicularly to the axis of rotation (A), wherein additionally an angular position of the scale element (2.1) in relation to the first position transducers (1.1, 1.3, 1.5) is determinable absolutely within a rotation by at least one of the first position transducers (1.1, 1.3, 1.5), and
- the at least two second position transducers (1.2, 1.4, 1.6) are arranged relative to one another such that they are offset in the circumferential direction (u), wherein the second graduation (2.12) is scannable by the second position transducers (1.2, 1.4, 1.6) and the axial position of the scale element (2.1) is determinable.

2. Measurement device (12) according to Claim 1, wherein the measurement device (12) has at least three first position transducers (1.1, 1.3, 1.5) and at least three second position transducers (1.2, 1.4, 1.6).

3. Measurement device (12) according to either of the preceding claims, wherein the measurement device (12) has a printed circuit board (1.7) on which at least one chip (1.71, 1.72) is mounted, wherein the first position transducers (1.1, 1.3, 1.5) and/or the second position transducers (1.2, 1.4, 1.6) are electrically connected to the chip (1.71, 1.72) such that signals of the first position transducers (1.1, 1.3, 1.5) and/or of the second position transducers (1.2, 1.4, 1.6) are processible by the chip (1.71, 1.72).

4. Measurement device (12) according to Claim 3, wherein the printed circuit board (1.7) has the shape of a ring.

5. Measurement device (12) according to Claim 3 or 4, wherein the first position transducers (1.1, 1.3, 1.5) and the second position transducers (1.2, 1.4, 1.6) are electrically connected to the chip (1.71, 1.72), wherein the angular position, the position in the plane (P) and the axial position of the scale element (2.1) are determinable by the chip (1.71, 1.72).

6. Measurement device (12) according to one of the preceding claims, wherein a tilt of the scale element (2.1) and thus of the axis of rotation (A) is determinable by the second position transducers (1.2, 1.4, 1.6).

7. Measurement device (12) according to one of Claims 3 to 6, wherein a further sensor (1.73), with which accelerations or temperatures are measurable, is mounted on the printed circuit board (1.7).

8. Measurement device (12) according to one of Claims 3 to 7, wherein a memory module (1.74) is mounted on the printed circuit board (1.7), which memory module (1.74) is utilizable for storing information based on the signals generated by the first position transducers (1.1, 1.3, 1.5) and/or the second position transducers (1.2, 1.4, 1.6) and/or the further sensor (1.73).

9. Measurement device (12) according to one of Claims 3 to 8, wherein the first position transducers (1.1, 1.3, 1.5) and/or the second position transducers (1.2, 1.4, 1.6) and/or the further sensor (1.73) are connected to the ring-shaped printed circuit board (1.7) by way of flexible printed circuit boards (1.13).

10. Measurement device (12) according to one of the preceding claims, wherein the first position transducers (1.1, 1.3, 1.5) and/or the second position transducers (1.2, 1.4, 1.6) are designed in the form of magnetic sensors and the structures of the first graduation (2.11) and/or the second graduation (2.12) are designed in the form of magnetic poles.

11. Measurement device (12) according to one of the preceding claims, wherein the sensors (1.11) of the first position transducers (1.1, 1.3, 1.5) are arranged relative to the axial direction (z) such that they are offset with respect to the sensors of the second position transducers (1.2, 1.4, 1.6).

12. Measurement device (12) according to one of the preceding claims, wherein the second graduation (2.12) is provided on a lateral surface side of a cylindrical scale element (2.1).

13. Assembly for a spindle or for a rotary table, comprising a measurement device (12) according to Claim 3, wherein the assembly has a housing (1.20) and the printed circuit board (1.7) is enclosed by the housing (1.20) .

14. Assembly according to Claim 12, wherein the assembly comprises a shaft (2.2), a prestress element (2.21) and two bearings (3, 4), which are designed in the form of rolling bearings, wherein the scale element (2.1) is mounted such that it is displaceable axially with respect to the shaft (2.2) and the bearings (3, 4) are prestressed axially with the aid of the prestress element (2.21) such that the scale element (2.1) is located in the flow of forces of the axial prestress.

15. Assembly according to Claim 13 or 14, wherein the assembly comprises a shaft (2.2), a prestress element (2.21) and two bearings (3, 4), which are designed in the form of rolling bearings, wherein the measurement device (12) comprises a measurement device housing (1.8) that is mounted such that it is displaceable axially with respect to the shaft (2.2) and the bearings (3, 4) are prestressed axially with the aid of the prestress element (2.21) such that the measurement device housing (1.8) is located in the flow of forces of the axial prestress.

## Revendications

1. Dispositif de mesure (12) destiné à une broche ou un plateau circulaire et comprenant au moins deux premiers capteurs de position (1.1, 1.3, 1.5) et au moins deux deuxièmes capteurs de position (1.2, 1.4, 1.6) et un élément d'échelle (2.1) qui comporte une première graduation (2.11) et a une deuxième graduation (2.12) et qui est disposé de façon à pouvoir tourner sur un axe de rotation (A) par rapport aux premiers et deuxièmes capteurs de position (1.1 à 1.6),
- la première graduation (2.11) comprenant des structures régulières qui sont disposées en rangée parallèlement les unes aux autres dans une première direction, la première direction comportant une composante directionnelle dans la direction circonférentielle (u), et
- la deuxième graduation (2.12) comprenant des structures régulières qui sont disposées en rangée parallèlement les unes aux autres dans une deuxième direction, la deuxième direction comportant une composante directionnelle dans la direction axiale (z), et
- les au moins deux premiers capteurs de position (1.1, 1.3, 1.5) étant disposés de manière décalée l'un par rapport à l'autre dans la direction circonférentielle (u), la première graduation (2.11) pouvant être balayée par les au moins deux premiers capteurs de position (1.1, 1.3, 1.5) de façon à pouvoir déterminer la position latérale de l'élément d'échelle (2.1) dans un plan (P) qui est orienté perpendiculairement à l'axe de rotation (A), l'un au moins des premiers capteurs de position (1.1, 1.3, 1.5) pouvant déterminer de manière absolue en une révolution une position angulaire de l'élément d'échelle (2.1) par rapport au premier capteur de position (1.1, 1.3, 1.5), et
- les au moins deux deuxièmes capteurs de position (1.2, 1.4, 1.6) étant disposés de manière décalée l'un par rapport à l'autre dans la direction circonférentielle (u), le deuxième capteur de position (1.2, 1.4, 1.6) pouvant balayer la deuxième graduation (2.12) et déterminer la position axiale de l'élément d'échelle (2.1) .

2. Dispositif de mesure (12) selon la revendication 1, le dispositif de mesure (12) comportant au moins trois premiers capteurs de position (1.1, 1.3, 1.5) et au moins trois deuxièmes capteurs de position (1.2, 1.4, 1.6).

3. Dispositif de mesure (12) selon l'une des revendications précédentes, le dispositif de mesure (12) comportant une carte de circuit imprimé (1.7) sur laquelle au moins un composant électronique (1.71, 1.72) est monté, les premiers capteurs de position (1.1, 1.3, 1.5) et/ou les deuxièmes capteurs de position (1.2, 1.4, 1.6) étant reliés électriquement au module électronique (1.71, 1.72), de sorte que les signaux des premiers capteurs de position (1.1, 1.3, 1.5) et/ou des deuxièmes capteurs de position (1.2, 1.4, 1.6) puissent être traités par le module électronique (1.71, 1.72).

4. Dispositif de mesure (12) selon la revendication 3, la carte de circuit imprimé (1.7) ayant une forme annulaire.

5. Dispositif de mesure (12) selon la revendication 3 ou 4, les premiers capteurs de position (1.1, 1.3, 1.5) et les deuxièmes capteurs de position (1.2, 1.4, 1.6) étant reliés électriquement au module électronique (1.71, 1.72), la position angulaire, la position dans le plan (P) et la position axiale de l'élément d'échelle (2.1) pouvant être déterminées par le module électronique (1.71, 1.72).

6. Dispositif de mesure (12) selon l'une des revendications précédentes, une inclinaison de l'élément d'échelle (2.1) et donc de l'axe de rotation (A) pouvant être déterminée par les deuxièmes capteurs de position (1.2, 1.4, 1.6).

7. Dispositif de mesure (12) selon l'une des revendications 3 à 6, un autre capteur (1.73), qui permet de mesurer des accélérations ou des températures, étant monté sur la carte de circuit imprimé (1.7).

8. Dispositif de mesure (12) selon l'une des revendications 3 à 7, un module de mémoire (1.74) étant monté sur la carte de circuit imprimé (1.7) et pouvant être utilisé comme enregistreur de données pour mémoriser des informations qui reposent sur les signaux générés par les premiers capteurs de position (1.1, 1.3, 1.5) et/ou les deuxièmes capteurs de position (1.2, 1.4, 1.6) et/ou l'autre capteur (1.73).

9. Dispositif de mesure (12) selon l'une des revendications 3 à 8, les premiers capteurs de position (1.1, 1.3, 1.5) et/ou les deuxièmes capteurs de position (1.2, 1.4, 1.6) et/ou l'autre capteur (1.73) étant reliés à la carte de circuit imprimé (1.7) en forme d'anneau par des cartes de circuits flexibles (1.13).

10. Dispositif de mesure (12) selon l'une des revendications précédentes, les premiers capteurs de position (1.1, 1.3, 1.5) et/ou les deuxièmes capteurs de position (1.2, 1.4, 1.6) étant conçus comme des capteurs magnétiques et les structures de la première graduation (2.11) et/ou de la deuxième graduation (2.12) étant conçues comme des pôles magnétiques.

11. Dispositif de mesure (12) selon l'une des revendications précédentes, les détecteurs (1.11) des premiers capteurs de position (1.1, 1.3, 1.5) étant disposés de manière décalée par rapport à la direction axiale (z) par rapport aux détecteurs des deuxièmes capteurs de position (1.2, 1.4, 1.6).

12. Dispositif de mesure (12) selon l'une des revendications précédentes, la deuxième graduation (2.12) étant appliquée sur un côté latéral d'un élément d'échelle cylindrique (2.1).

13. Ensemble destiné à une broche ou un plateau circulaire et comprenant un dispositif de mesure (12) selon la revendication 3, l'ensemble comportant un boîtier (1.20) et la carte de circuit imprimé (1.7) étant enfermée par le boîtier (1.20).

14. Ensemble selon la revendication 12, l'ensemble comprenant un arbre (2.2), un élément de précontrainte (2.21) et deux paliers (3, 4) qui sont conçus comme des paliers à rouleaux, l'élément d'échelle (2.1) étant monté de manière déplaçable axialement par rapport à l'arbre (2.2) et les paliers (3, 4) étant précontraints axialement à l'aide de l'élément de précontrainte (2.21) de sorte que l'élément d'échelle (2.1) se trouve dans le flux de force de la précontrainte axiale.

15. Ensemble selon la revendication 13 ou 14, l'ensemble comprenant un arbre (2.2), un élément de précontrainte (2.21) et deux paliers (3, 4) qui sont conçus comme des paliers à rouleaux, le dispositif de mesure (12) comprenant un boîtier de dispositif de mesure (1.8) qui est monté de manière déplaçable axialement par rapport à l'arbre (2.2), et les paliers (3, 4) étant précontraints axialement à l'aide de l'élément de précontrainte (2.21) de telle sorte que le boîtier de dispositif de mesure (1.8) se trouve dans le flux de force de la précontrainte axiale.
